(19) Europäisches Patentamt / European Patent Office / Office européen des brevets

(11) **EP 3 657 575 A1**

(12) **EUROPÄISCHE PATENTANMELDUNG**

(43) Veröffentlichungstag:
**27.05.2020 Patentblatt 2020/22**

(21) Anmeldenummer: **19207660.2**

(22) Anmeldetag: **07.11.2019**

(51) Int Cl.:
*H01M 4/04* (2006.01)　　*H01M 4/139* (2010.01)
*H01M 10/04* (2006.01)　*H01M 10/0562* (2010.01)
*H01M 4/02* (2006.01)　　*H01M 10/052* (2010.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **21.11.2018 DE 102018219925**

(71) Anmelder: **Robert Bosch GmbH**
**70442 Stuttgart (DE)**

(72) Erfinder:
• **Hanauer, Matthias Martin**
**71229 Leonberg (DE)**
• **Hildebrand, Felix Eberhard**
**70176 Stuttgart-West (DE)**

(54) **KOMPOSITELEKTRODE MIT HOMOGENEM ABSCHEIDUNGSVERHALTEN**

(57) Gegenstand der Erfindung ist eine Kompositelektrode (1) für eine elektrochemische Festkörperzelle, umfassend: mindestens eine im Wesentlichen nicht poröse Festelektrolytschicht (2), umfassend mindestens einen ersten Festelektrolyten,

mindestens eine poröse Festelektrolytschicht (3), umfassend mindestens einen zweiten Festelektrolyten (7), und mindestens eine Stromsammlerschicht (4),

wobei

die poröse Festelektrolytschicht (3) auf mindestens einer Oberfläche (41, 42) der Stromsammlerschicht (4) und zwischen der im Wesentlichen nicht porösen Festelektrolytschicht (2) und der Stromsammlerschicht (4) angeordnet ist,

mindestens ein Teil der Oberfläche der Poren (6) der porösen Festelektrolytschicht (3) durch eine Beschichtung (5) mit mindestens einem Material zur Reduzierung eines Grenzflächenwiderstands Z zwischen dem zweiten Festelektrolyten (7) und elementarem Lithium modifiziert wurde,

und die Schichtdicke der Beschichtung (5) der Oberfläche der Poren (6) der porösen Festelektrolytschicht (3) mit mindestens einem Material zur Reduzierung des Grenzflächenwiderstands Z zwischen dem zweiten Festelektrolyten (7) und elementarem Lithium mit zunehmendem Abstand der jeweiligen Porenoberfläche von der Stromsammlerschicht (4) abnimmt.

Gegenstand der Erfindung ist auch ein Verfahren zur Herstellung einer solchen Kompositelektrode (1), deren Verwendung sowie eine elektrochemischen Festkörperzelle, umfassend eine solche Kompositelektrode (1).

**Fig. 1**

EP 3 657 575 A1

**Beschreibung**

Die Erfindung betrifft eine Kompositelektrode, welche mindestens eine poröse Festelektrolytschicht umfasst, und die ein homogenes Abscheidungsverhalten bei der Abscheidung von elementarem Lithium bei der Verwendung als negative Elektrode in einer elektrochemischen Festkörperzelle aufweist. Die Erfindung betrifft auch ein Verfahren zur Herstellung einer solchen Kompositelektrode sowie deren Verwendung.

Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithiumionen-Batteriezellen Verwendung. Diese zeichnen sich unter anderem durch hohe Energiedichten, thermische Stabilität und eine äußerst geringe Selbstentladung aus. Lithiumionen-Batteriezellen kommen unter anderem in Kraftfahrzeugen, insbesondere in Elektrofahrzeugen, zum Einsatz.

Lithiumionen-Batteriezellen umfassen üblicherweise eine positive Elektrode, die auch als Kathode bezeichnet wird, und eine negative Elektrode, die auch als Anode bezeichnet wird. Die Elektroden umfassen jeweils mindestens einen Stromsammler und mindestens ein Aktivmaterial. Neuere Entwicklungen zielen auf die Verwendung von Festelektrolyten. Diese können Dendriten-förmiges Abscheiden von elementarem Lithium unterbinden und erhöhen so die Sicherheit bei der Verwendung von metallischem Lithium als Aktivmaterial. Metallisches Lithium wird aufgrund der höheren erzielbaren Energiedichte vorzugsweise als Anodenaktivmaterial eingesetzt. Kompakte Elektroden aus metallischem Lithium weisen eine geringe Grenzfläche zum Separator auf und führen so während des Betriebs der elektrochemischen Festkörperzelle zu hohen Stromdichten und daraus resultierenden Schädigungsmechanismen wie Dendritenwachstum.

E. D. Wachsman und Mitarbeiter von der Universität Maryland haben den Einsatz von porösen Lithium-Metall-Anoden vorgeschlagen, welche in einer Lithium-Schwefel-Batterie zum Einsatz kommen (https://ecs.confex.com/ecs/232/webprogram/Paper103639.html).

US 2017/187063 offenbart ein Elektrolytmaterial, umfassend ionisch leitfähige keramische Partikel, die in einer Matrix aus ionisch leitfähigem festem Polymer, Elektrolytsalz und einem chemischen Additiv verteilt sind, um einen Keramik-Polymer-Verbundstoff zu bilden, wobei das chemische Additiv so konfiguriert ist, dass es den Ionenwiderstand an Grenzflächen zwischen den keramischen Partikeln und dem ionisch leitfähigen festen Polymer verringert.

JP 2017-117672 offenbart ein Verfahren zum Herstellen einer vollständig festen Energiespeichervorrichtung umfassend die folgenden Schritte: Bilden eines Positivelektroden-Stromkollektors auf einem ersten isolierenden Substrat; Bilden einer positiven Elektrodenschicht auf dem Stromkollektor der positiven Elektrode; Bilden einer ersten Festelektrolytschicht auf der positiven Elektrodenschicht; Bilden eines negativen Elektrodenstromkollektors auf einem zweiten isolierenden Substrat; Bilden einer negativen Elektrodenschicht auf dem Stromkollektor der negativen Elektrode; Bilden einer zweiten Festelektrolytschicht auf der negativen Elektrodenschicht; Bilden einer haftenden Festelektrolytschicht auf mindestens einer der ersten und zweiten Festelektrolytschichten; und Verbinden der ersten und zweiten Festelektrolytschicht durch die haftende Festelektrolytschicht miteinander.

Offenbarung der Erfindung

Gegenstand der Erfindung ist eine Kompositelektrode für eine elektrochemische Festkörperzelle, umfassend:

mindestens eine im Wesentlichen nicht poröse Festelektrolytschicht, umfassend mindestens einen ersten Festelektrolyten,
mindestens eine poröse Festelektrolytschicht, umfassend mindestens einen zweiten Festelektrolyten, und
mindestens eine Stromsammlerschicht,
wobei
die poröse Festelektrolytschicht auf mindestens einer Oberfläche der Stromsammlerschicht und zwischen der im Wesentlichen nicht porösen Festelektrolytschicht und der Stromsammlerschicht angeordnet ist,
mindestens ein Teil der Oberfläche der Poren der porösen Festelektrolytschicht durch eine Beschichtung mit mindestens einem Material zur Reduzierung des Grenzflächenwiderstands zwischen dem zweiten Festelektrolyt und elementarem Lithium modifiziert wurde,
und die Schichtdicke der Beschichtung der Oberfläche der Poren der porösen Festelektrolytschicht mit mindestens einem Material zur Reduzierung des Grenzflächenwiderstands zwischen dem zweiten Festelektrolyt und elementarem Lithium mit zunehmendem Abstand der jeweiligen Porenoberfläche von der Stromsammlerschicht abnimmt.

Die erfindungsgemäße Kompositelektrode umfasst mindestens eine im Wesentlichen nicht poröse Festelektrolytschicht. Diese dient in der erfindungsgemäßen Kompositelektrode vorrangig als Separator und ist somit vorzugsweise nicht elektrisch leitfähig, während sie eine gute Ionenleitfähigkeit aufweist, insbesondere gegenüber Lithiumionen.

Die im Wesentlichen nicht poröse Festelektrolytschicht weist eine erste und eine zweite Oberfläche auf und umfasst mindestens einen Festelektrolyten sowie optional mindestens ein Bindemittel und/oder gegebenenfalls mindestens ein Leitsalz zur Verbesserung der Ionenleitfähigkeit.

Vorzugsweise ist der Festelektrolyt der im Wesentlichen nicht porösen Festelektrolytschicht mindestens ein anorganischer Festelektrolyt, insbesondere ausgewählt aus einem gesinterten anorganischen Ionenleiter und/oder einem nicht gesinterten anorganischen Ionenleiter. Geeignete anorganische Festelektrolyte sind dem Fachmann bekannt.

Gesinterte anorganische Ionenleiter weisen eine besonders hohe mechanische Festigkeit auf. Geeignete gesinterte anorganische Ionenleiter umfassen insbesondere oxidische Ionenleiter, wie beispielsweise:

a) Granate der allgemeinen Formel (I):

$$Li_yA_3B_2O_{12} \qquad (I)$$

wobei A aus mindestens einem Element aus der Gruppe La, K, Mg, Ca, Sr und Ba ausgewählt ist,
B aus mindestens einem Element aus der Gruppe Zr, Hf, Nb, Ta, W, In, Sn, Sb, Bi und Te ausgewählt ist,
wobei $3 \leq y \leq 7$ ist.
Besonders bevorzugte Vertreter sind Granate der Formel (I) in vorwiegend kubischer Kristallstruktur und insbesondere Lithium-Lanthan-Zirkonate (LLZO) der Formel $Li_7La_3Zr_2O_{12}$ und Lithium-Lanthan-Tantalate (LLTa) der Formel $Li_5La_3Ta_2O_{12}$ sowie mit Niob oder Tantal dotierte LLZO.

b) Perowskite der allgemeinen Formel (II):

$$Li_{3x}La_{2/3-x}TiO_3 \text{ (LLTO)} \qquad (II)$$

wobei $2/3 \geq x \geq 0$ ist.
Besonders bevorzugte Vertreter sind Perowskite der $Li_{0,35}La_{0,55}TiO_3$.

c) Gläser und/oder Glaskeramiken vom NASICON-Typ, dargestellt durch die allgemeine Formel (III):

$$Li_{1+x}R_xM_{2-x}(PO_4)_3 \qquad (III)$$

wobei M aus mindestens einem Element aus der Gruppe Ti, Ge und Hf ausgewählt ist,
R aus mindestens einem Element aus der Gruppe Al, B, Sn und Ge ausgewählt ist und
wobei $0 \leq x < 2$ ist.
Bevorzugte Vertreter sind Lithium-Aluminium-Titan-Phosphate (LATP, insbesondere $Li_{1,4}Al_{0,4}Ti_{1,6}(PO_4)_3$) und Lithium-Aluminium-Germanium-Phosphate (LAGP, insbesondere $Li_{1,5}Al_{0,5}Ge_{1,5}(PO_4)_3$).

d) Gläser und/oder Glaskeramiken vom LiSICON-Typ, dargestellt durch die allgemeine Formel (IV):

$$Li_{2+2x}Zn_{1-x}GeO_4 \qquad (IV)$$

wobei x sich auf den jeweiligen Anteil in mol-% bezieht und $0 \leq x < 1$ ist;
Bevorzugter Vertreter ist $Li_2ZnGeO_4$.

Geeignete nicht gesinterte anorganische Ionenleiter umfassen insbesondere sulfidische Festelektrolyte, wie beispielsweise:

a) sulfidische Gläser und/oder Glaskeramiken der allgemeinen Formel (V):

$$(1-a) [x (Li_2S) y (P_2S_5) z (M_nS_m)] \cdot a [LiX] \qquad (V)$$

wobei $M_nS_m$ die Bedeutung $SnS_2$, $GeS_2$, $B_2S_3$ oder $SiS_2$ hat,
X die Bedeutung Cl, Br oder I hat,

x, y und z jeweils unabhängig voneinander einen Wert von 0 bis 1 einnehmen können, mit der Maßgabe, dass x + y + z = 1 ist, und

a einen Wert von 0 bis 0,5, insbesondere 0 bis 0,35 hat;

Bevorzugte Vertreter sind $Li_{10}GeP_2S_{12}$, $Li_{9,6}P_3S_{12}$ und $Li_{9,54}Si_{1,74}P_{1,44}S_{11,7}Cl_{0,3}$.

b) sulfidische Gläser und/oder Glaskeramiken der Formel (VI):

$$Li_3PS_4 \qquad (VI).$$

c) sulfidische Gläser und/oder Glaskeramiken der Formel (VII):

$$x\,[Li_2S] \cdot (1-x)\,[P_2S_5] \qquad (VII)$$

wobei $0 < x < 1$ ist.

Bevorzugte Vertreter sind $0,67\,[Li_2S] \cdot 0,33\,[P_2S_5]$, $0,7\,[Li_2S] \cdot 0,3\,[P_2S_5]$ und $0,75\,[Li_2S] \cdot 0,25\,[P_2S_5]$.

d) sulfidische Gläser und/oder Glaskeramiken der Formel (VIII):

$$(1-y)\,(0,7 \cdot Li_2S \cdot 0,3 \cdot P_2S_5) \cdot y\,LiX \qquad (VIII)$$

wobei X die Bedeutung F, Cl, Br und/oder I haben kann,

und $0 \leq y \leq 0,2$ ist; und

Bevorzugte Vertreter sind $0,9\,(0,7 \cdot Li_2S \cdot 0,3 \cdot P_2S_5) \cdot 0,1\,Lil$ und $0,9\,(0,7 \cdot Li_2S \cdot 0,3 \cdot P_2S_5) \cdot 0,1\,LiCl$.

e) Argyrodite der Formel (IX):

$$Li_yPS_5X \qquad (IX)$$

wobei y einen Wert von 7 hat und X die Bedeutung S hat, oder wobei y einen Wert von 6 hat und X ausgewählt sein kann aus Cl, Br und I und Gemischen davon.

Bevorzugte Vertreter sind $Li_7PS_6$, $Li_6PS_5Cl$ und $Li_6PS_5l$.

Die im Wesentlichen nicht poröse Festelektrolytschicht umfasst zudem mindestens ein Bindemittel. Dies ist möglich, wenn auf ein Sintern des lonenleiters verzichtet werden kann, was auf sulfidische lonenleiter zutrifft. Geeignete Bindemittel umfassen mindestens ein organisches Polymer. Dabei können sämtliche Bindemittel eingesetzt werden, die üblicherweise in Festelektrolytkompositen zum Einsatz kommen. Geeignete Bindemittel sind dem Fachmann bekannt und umfassen sowohl Bindemittel, die ausschließlich der Verbesserung der Stabilität der Kompositfolie dienen (diese werden hierin auch Polymerbindemittel genannt) als auch Bindemittel, die auch andere Funktionen übernehmen, wie Polymerelektrolyte. Das Bindemittel kann daher neben dem mindestens einen Polymer auch weitere Bestandteile umfassen, insbesondere Leitsalze zur Verbesserung der lonenleitfähigkeit.

Als geeignete Polymerbindemittel sind insbesondere Carboxymethylcellulose (CMC), Styrol-Butadien-Copolymer (SBR), Polyvinylidenfluorid (PVDF), Polytetrafluorethen (PTFE), Polyacrylnitril (PAN) und Ethylen-Propylen-Dien-Terpolymer (EPDM) zu nennen.

Polymerelektrolyte umfassen mindestens ein Polymer und mindestens ein Leitsalz, insbesondere ein Lithiumsalz.

Als geeignete Polymere für die genannten Polymerelektrolyte hervorzuheben sind insbesondere Polyalkylenoxid-Derivate von Polyethylenoxid, Polypropylenoxid und dergleichen oder Polymere, umfassend Polyalkylenoxid-Derivate; Derivate von Polyvinylidenfluorid (PVDF), Polyhexafluorpropylen, Polycarbonate, Polyacrylate, Polyphosphorsäureester, Polyalkylimine, Polyacrylnitril, Poly(meth)acrylsäureester, Polyphosphazene, Polyurethane, Polyamide, Polyester, Polysiloxane, Polymalonsäureester und dergleichen. Besonders hervorzuhebende Derivate sind fluorierte oder teilfluorierte Derivate der vorgenannten Polymere. Ebenfalls geeignet sind Block- und Bürsten-Copolymere verschiedener Vertreter der vorgenannten Polymerklassen. Diese können auch mechanisch robuste Polymerblöcke umfassen, wie beispielsweise Polystyrol oder Polyimide. Ebenfalls umfasst sind quervernetzte Polymere und Oligomere (d.h. im Sinne dieser Erfindung Polymere mit > 2 und < 20 Widerholungseinheiten der Monomere), aus denen das Polymer aufgebaut ist. Polymere mit $\geq$ 20 Wiederholungseinheiten werden hierin als Polymer bezeichnet. Bevorzugt sind Polymerverbindungen, welche eine Oxyalkylenstruktur, eine Urethanstruktur oder eine Carbonatstruktur im Molekül aufweisen. Beispielsweise sind Polyalkylenoxide, Polyurethane und Polycarbonate in Hinblick auf ihre gute elektrochemische Stabilität bevorzugt. Ferner sind Polymere mit einer Fluorkohlenstoffgruppe bevorzugt. Polyvinylidenfluorid und Polyhexafluorpropylen sind in Hinblick auf ihre Stabilität bevorzugt. Die Anzahl an Wiederholungseinheiten dieser Oxyalkylen-, Urethan-, Carbonat- und/oder Fluorkohlenstoffeinheiten liegt vorzugsweise in einem Bereich von jeweils 1 bis 1000, stärker bevorzugt ein einem Bereich von 5 bis 100. Ganz besonders bevorzugt sind Polyalkylenoxide wie Polyethylenoxid, Polypropylenoxid mit 1 bis 1000, stärker bevorzugt 5 bis 100, Widerholungseinheiten.

Zur Verbesserung der Ionenleitfähigkeit wird dem mindestens einen Polymer des Polymerelektrolyts üblicherweise mindestens ein Leitsalz zugegeben. Geeignete Leitsalze sind insbesondere Lithiumsalze. Das Leitsalz kann beispielsweise ausgewählt sein aus der Gruppe, bestehend aus Lithiumhalogeniden (LiCl, LiBr, LiI, LiF), Lithiumperchlorat (LiClO$_4$), Lithiumtetrafluorborat (LiBF$_4$), Lithiumhexafluorphosphat (LiPF$_6$), Lithiumhexafluorarsenat (LiAsF$_6$), Lithiumnitrat (LiNO$_3$), Lithiumtrifluormethansulfonat (LiSO$_3$CF$_3$), Lithiumbis(fluorsulfonyl)imid (Li[N(SO$_2$F)$_2$], LiFSI), Lithiumbis(trifluormethylsulphonyl)imid (Li[N(SO$_2$(CF$_3$))$_2$], LiTFSI), Lithiumbis(pentafluorethylsulphonyl)imid (LiN(SO$_2$C$_2$F$_5$)$_2$, LiBETI), Lithiumbis(oxalato)borat (LiB(C$_2$O$_4$)$_2$, LiBOB), Lithiumdifluor(oxalato)borat (Li[BF$_2$(C$_2$O$_4$)], LiDFOB), Lithiumdifluor-tri(pentafluorethyl)phosphat (LiPF$_2$(C$_2$F$_5$)$_3$) und Kombinationen davon. Besonders bevorzugt ist das Leitsalz ausgewählt aus Lithiumiodid (LiI), Lithiumperchlorat (LiClO$_4$), Lithiumtetrafluorborat (LiBF$_4$), Lithiumhexafluorphosphat (LiPF$_6$), Lithiumbis(fluorsulfonyl)imid (Li[N(SO$_2$F)$_2$], LiFSI) und Lithiumbis(trifluormethylsulphonyl)imid (Li[N(SO$_2$(CF$_3$))$_2$], LiTFSI), und Kombinationen davon. Die Leitsalze können jeweils einzeln oder in Kombination miteinander verwendet werden.

Vorzugsweise macht das mindestens eine Leitsalz einen Anteil von 1 bis 50 Gew.-%, insbesondere 2 bis 40 Gew.-% des Gesamtgewichts des Polymerelektrolyts aus.

Die Zusammensetzung der Kompositfolie kann optional noch weitere Bestandteile umfassen, umfasst jedoch vorzugsweise keine elektrischen Leitadditive.

Die im Wesentlichen nicht poröse Festelektrolytschicht ist im Wesentlichen frei von Poren. Das bedeutet, dass die im Wesentlichen nicht poröse Festelektrolytschicht weniger als 5 Vol.-%, stärker bevorzugt weniger als 2 Vol.-% und insbesondere weniger als 1 Vol.-%, bezogen auf das Gesamtvolumen der Festelektrolytschicht, an freiem Porenvolumen aufweist.

Die im Wesentlichen nicht poröse Festelektrolytschicht weist vorzugsweise eine Schichtdicke von 0,1 bis 500 $\mu$m, insbesondere 1 bis 100 $\mu$m auf.

Die erfindungsgemäße Kompositelektrode umfasst mindestens eine Stromsammlerschicht. Diese dient zur elektrischen Kontaktierung der Kompositelektrode. Die mindestens eine Stromsammlerschicht umfasst mindestens ein elektrisch leitfähiges Material, insbesondere ein Metall. Besonders bevorzugte Metalle sind Kupfer, Lithium, Nickel, Aluminium sowie Legierungen dieser Metalle miteinander oder mit anderen Metallen. Die mindestens eine Stromsammlerschicht weist mindestens eine erste und mindestens eine zweite Oberfläche auf und weist vorzugsweise eine Schichtdicke von 10 bis 500 $\mu$m, insbesondere 50 bis 300 $\mu$m auf.

Die erfindungsgemäße Kompositelektrode umfasst mindestens eine poröse Festelektrolytschicht. Die Porenoberfläche der porösen Festelektrolytschicht dient zur Abscheidung des eigentlichen Aktivmaterials, nämlich des elementaren Lithiums. Die mindestens eine poröse Festelektrolytschicht ist somit ionisch leitfähig und weist insbesondere gegenüber Lithiumionen eine gute Leitfähigkeit auf.

Die mindestens eine poröse Festelektrolytschicht weist mindestens eine erste und mindestens eine zweite Oberfläche auf. Die mindestens eine poröse Festelektrolytschicht ist auf mindestens der ersten Oberfläche der Stromsammlerschicht angeordnet. Vorzugsweise ist die mindestens eine poröse Festelektrolytschicht unmittelbar auf mindestens der ersten Oberfläche der Stromsammlerschicht angeordnet, d.h. es befindet sich kein weiteres Material zwischen der mindestens einen porösen Festelektrolytschicht und der Stromsammlerschicht und die erste Oberfläche der Stromsammlerschicht steht in unmittelbarem Kontakt zur ersten Oberfläche der porösen Festelektrolytschicht. In einer alternativen Ausführungsform befindet sich eine Beschichtung aus einem weiteren Metall zwischen der Stromsammlerschicht und der porösen Festelektrolytschicht, um den Kontakt zwischen Stromsammlerschicht und poröser Festelektroschicht zu verbessern.

Die mindestens eine poröse Festelektrolytschicht ist zudem zwischen der im Wesentlichen nicht porösen Festelektrolytschicht und der Stromsammlerschicht angeordnet. Vorzugsweise ist die im Wesentlichen nicht poröse Festelektrolytschicht unmittelbar auf der von der Stromsammlerschicht abgewandten Oberfläche der mindestens einen porösen Festelektrolytschicht angeordnet, d.h. ohne weitere Zwischenschichten. Die im Wesentlichen nicht poröse Festelektrolytschicht ist auf der zweiten Oberfläche der porösen Festelektrolytschicht angeordnet. Vorzugsweise steht die erste Oberfläche der im Wesentlichen nicht porösen Festelektrolytschicht in unmittelbarem Kontakt zur zweiten Oberfläche der porösen Festelektrolytschicht.

Die poröse Festelektrolytschicht umfasst mindestens einen Festelektrolyt sowie optional mindestens ein Bindemittel und/oder gegebenenfalls mindestens ein Leitsalz zur Verbesserung der Ionenleitfähigkeit und/oder mindestens ein elektrisches Leitadditiv zur Verbesserung der elektrischen Leitfähigkeit.

Vorzugsweise ist der Festelektrolyt der porösen Festelektrolytschicht mindestens ein anorganischer Festelektrolyt, insbesondere ausgewählt aus einem gesinterten anorganischen Ionenleiter und/oder einem nicht gesinterten anorganischen Ionenleiter. Geeignete anorganische Festelektrolyte umfassen insbesondere die zuvor beschriebenen

gesinterten anorganischen Ionenleiter und/oder einem nicht gesinterten anorganischen Ionenleiter. Die poröse Festelektrolytschicht und die im Wesentlichen nicht poröse Festelektrolytschicht können dabei ganz oder teilweise dieselben anorganischen Festelektrolyte umfassen. Die anorganischen Festelektrolyte der porösen Festelektrolytschicht und der im Wesentlichen nicht porösen Festelektrolytschicht können aber auch unterschiedlich voneinander sein.

Die poröse Festelektrolytschicht umfasst zudem optional mindestens ein Bindemittel und/oder gegebenenfalls mindestens ein Leitsalz. Beide sind vorzugsweise ausgewählt aus den vorgenannten Bindemitteln und Leitsalzen und können gleich oder verschieden von den Bindemitteln und/oder Leitsalzen der im Wesentlichen porösen Festelektrolytschicht sein.

Die poröse Festelektrolytschicht umfasst zudem optional mindestens ein elektrisches Leitadditiv. Als geeignete elektrische Leitadditive sind Leitruß, Graphit und Kohlenstoffnanoröhrchen zu nennen. Der Einsatz eines elektrischen Leitadditivs ist in der Regel dann möglich, wenn auf ein Sintern des Ionenleiters verzichtet werden kann, was insbesondere für sulfidische Ionenleiter zutrifft.

Die poröse Festelektrolytschicht weist eine offene, poröse Struktur auf. Vorzugsweise beträgt das offene Porenvolumen der porösen Festelektrolytschicht mindestens 40 Vol.-%, vorzugsweise mindestens 50 Vol.-%, und insbesondere mindestens 60 Vol.-%, bezogen auf das Gesamtvolumen der porösen Festelektrolytschicht. Die Bestimmung des offenen Porenvolumens kann mittels herkömmlicher, dem Fachmann bekannter Verfahren erfolgen. Als geeignete Verfahren hervorzuheben sind BET-Methoden (DIN ISO 9277) und Quecksilber-Porosimetrie (DIN ISO 66139).

In einer Ausführungsform der Erfindung ist die Porosität über das gesamte Volumen der porösen Festelektrolytschicht konstant.

In einer alternativen Ausführungsform nimmt die Porosität, d.h. der Anteil an offenem Porenvolumen in der porösen Festelektrolytschicht bezogen auf das Gesamtvolumen der porösen Festelektrolytschicht, mit steigendem Abstand von der Oberfläche der Stromsammlerschicht ab.

Die poröse Festelektrolytschicht weist vorzugsweise eine Schichtdicke von 1 bis 500 $\mu$m, insbesondere 10 bis 100 $\mu$m auf.

Die poröse Festelektrolytschicht ist ferner dadurch gekennzeichnet, dass die Porenoberflächen der offenen Poren der porösen Festelektrolytschicht mindestens teilweise mit einer Beschichtung versehen sind. Die Beschichtung umfasst dabei mindestens ein Material, welches zur Reduzierung des Grenzflächenwiderstands zwischen dem zweiten Festelektrolyt und elementarem Lithium geeignet ist.

Die Modifizierung der Porenoberfläche der freien Poren der porösen Festelektrolytschicht erfolgt vorzugsweise in Abstimmung auf die spezifischen Eigenschaften des jeweiligen Festelektrolyts. Die Reduzierung des Grenzflächenwiderstands zwischen dem zweiten Festelektrolyt und elementarem Lithium wird vorzugsweise durch eine Beschichtung mit einem Material erreicht, welches die elektrische Leitfähigkeit und/oder die Permittivität (dielektrische Leitfähigkeit) der Porenoberfläche erhöht.

Die Erhöhung der elektrischen Leitfähigkeit wird erfindungsgemäß vorzugsweise durch eine Beschichtung erzielt, die mindestens ein elektrisch leitfähiges Material umfasst. Geeignete Materialien sind insbesondere elektrisch leitfähige Kohlenstoffmodifikationen, Metalle und Legierungen, anorganische Halbleiter sowie elektrisch leitfähige Polymere. Als elektrisch leitfähige Kohlenstoffmodifikationen hervorzuheben sind insbesondere Leitruß, Graphit und Kohlenstoffnanoröhrchen. Geeignete Metalle umfassen insbesondere Gold, Platin, Kupfer, Silber und Lithium. Als Legierung sind insbesondere Gold-Lithium-Legierungen hervorzuheben. Als anorganische Halbleiter sind Si, GaN und CdTe hervorzuheben, die gegebenenfalls auch p- oder n-dotiert sein können. Geeignete elektrisch leitfähige Polymere zeichnen sich insbesondere durch konjugierte Doppelbindungen entlang des Polymerrückgrats aus. Hervorzuheben sind Polypyrrol, Polythiophen, Polyanilin, Polyacetylen und Poly-p-phenylen.

Die Erhöhung der Permittivität (dielektrischen Leitfähigkeit) wird erfindungsgemäß vorzugsweise durch eine Beschichtung erzielt, die mindestens ein dielektrisches Material mit hoher Dielektrizitätskonstante umfasst. Geeignete Materialien sind insbesondere $BaTiO_3$, $SrTiO_3$, Barium-Strontium-Titanate, $CaCu_3Ti_4O_{12}$, $TiO_2$, und $Al_2O_3$. Ferner sind Kompositmaterialien geeignet, die aus Partikeln der zuvor genannten elektrisch leitfähigen Materialien (Kohlenstoffmodifikationen, wie Leitruß, Graphit, Carbon Nanotubes, Metalle wie Au, Pt, Cu, Ag, Li, Legierungen wie Li/Au, anorganische Halbleiter wie Si, GaN, CdTe, die optional p- oder n-dotiert sein können, und elektrisch leitfähige Polymere) mit einer isolierenden Hülle, insbesondere in einer Hülle aus einem nicht leitfähigen Polymer (z.B. einem Polyolefin).

Die elektrisch leitfähigen Materialien und/oder dielektrischen Materialien werden Form einer Beschichtung auf mindestens einem Teil der Porenoberfläche des offenen Porenvolumens der porösen Festelektrolytschicht aufgebracht.

Die Beschichtung der Porenoberfläche der offenen Poren der porösen Festelektrolytschicht mit mindestens einem Material zur Reduzierung des Grenzflächenwiderstands zwischen dem zweiten Festelektrolyt und elementarem Lithium zeichnet sich dadurch aus, dass diese eine Schichtdicke und/oder einen Bedeckungsgrad aufweist, die mit zunehmendem Abstand der jeweiligen Porenoberfläche von der Stromsammlerschicht abnimmt. Die Beschichtung weist vorzugsweise eine Schichtdicke von mindestens 1 nm (in der Nähe der Stromsammlerschicht), vorzugsweise mindestens 1,5 nm, und maximal 500 nm (in der Nähe der im Wesentlichen nicht porösen Festelektrolytschicht), vorzugsweise maximal 400 nm, auf. Im Fall einer teilweisen Beschichtung ist der Bedeckungsgrad vorzugsweise mindestens 1 % (in der Nähe der Stromsammlerschicht) und maximal 100 % (in der Nähe der im Wesentlichen nicht porösen Festelektrolytschicht).

Die Beschichtung ist vorzugsweise hinsichtlich des eingesetzten Beschichtungsmaterials, der Schichtdicke und des Bedeckungsgrads der Beschichtung, der Zusammensetzung der Beschichtung sowie der Zusammensetzung und Porosität der porösen Festelektrolytschicht so ausgewählt, dass die Reduzierung des Grenzflächenwiderstands Z zwischen dem zweiten Festelektrolyt und elementarem Lithium folgendem funktionalem Zusammenhang folgt:

$$Z(x) = const. + \frac{a_v}{2\sigma_{ion}} x^2$$

wobei $a_v$ die Volumen-spezifische aktive Oberfläche der porösen Festelektrolytschicht ist,
$\sigma_{ion}$ der effektive ionische Widerstand des zweiten Festelektrolyten ist, und
x der Abstand der jeweiligen Porenoberfläche zur Oberfläche der Stromsammlerschicht ist.

Die Auswahl der Materialien der beschichteten, porösen Festelektrolytschicht, insbesondere die Auswahl des zweiten Festelektrolyts und des Beschichtungsmaterials, wird vorzugsweise so getroffen, dass Aktivierungsenergien des Grenzflächenwiderstands an der Porenoberfläche der Poren der porösen Festelektrolytschicht und des ionischen Widerstands des zweiten Festelektrolyts möglichst ähnlich sind. Dadurch wird gewährleistet, dass ein homogenes Abscheidungsverhalten für die Abscheidung von elementarem Lithium über einen möglichst breiten Temperaturbereich unabhängig vom Abstand zur Stromsammlerschicht erhalten bleibt.

Alternativ wird das Grenzflächenwiderstandsprofil für die bevorzugte Lade-Temperatur der elektrochemischen Festkörperzelle, in der die Kompositelektrode eingesetzt werden soll, optimiert, um die Alterung der porösen Festelektrolytschicht zu minimieren.

In einer Ausführungsform der Erfindung sind die Poren des offenen Porenvolumens der porösen Festelektrolytschicht darüber hinaus (d.h. abgesehen von der erfindungsgemäßen Beschichtung) nicht gefüllt.

In einer alternativen Ausführungsform der Erfindung sind die Poren des offenen Porenvolumens der porösen Festelektrolytschicht darüber hinaus (d.h. abgesehen von der erfindungsgemäßen Beschichtung) ganz oder teilweise mit elementarem Lithium gefüllt.

Gegenstand der Erfindung ist auch ein Verfahren zur Herstellung einer erfindungsgemäßen Kompositelektrode, mindestens umfassend die folgenden Verfahrensschritte:

(a) Bereitstellen eines ersten Verbundmaterials aus mindestens einem ersten Festelektrolyt und gegebenenfalls mindestens einem ersten Bindemittel,
(b) Bereitstellen mindestens einer im Wesentlichen nicht porösen Schicht aus dem ersten Verbundmaterial auf einer Substratoberfläche, um so eine im Wesentlichen nicht poröse Festelektrolytschicht zu bilden, die eine erste und eine zweite Oberfläche aufweist;
(c) Bereitstellen eines zweiten Verbundmaterials aus mindestens einem zweiten Festelektrolyten und gegebenenfalls mindestens einem zweiten Bindemittel,
(d) Aufbringen mindestens einer porösen Schicht aus dem zweiten Verbundmaterial auf mindestens einem Teil der ersten Oberfläche der im Wesentlichen nicht porösen Festelektrolytschicht, um so eine poröse Festelektrolytschicht zu bilden, die eine erste und eine zweite Oberfläche aufweist, wobei die zweite Oberfläche der porösen Festelektrolytschicht der ersten Oberfläche der im Wesentlichen nicht porösen Festelektrolytschicht zugewandt ist;
(e) Beschichten mindestens eines Teils der Porenoberfläche der Poren des zweiten Verbundmaterials mit mindestens einem Material zur Reduzierung des Grenzflächenwiderstands zwischen dem zweiten Festelektrolyt und elementarem Lithium, wobei die Schichtdicke und/oder der Bedeckungsgrad der Beschichtung mit zunehmendem Abstand der jeweiligen Porenoberfläche von der ersten Oberfläche der porösen Festelektrolytschicht abnimmt;
(f) Aufbringen mindestens einer Stromsammlerschicht auf die erste Oberfläche der porösen Festelektrolytschicht; und
(g) Gegebenenfalls vollständiges oder teilweises Befüllen der Poren des ersten Verbundmaterials mit elementarem Lithium.

In Verfahrensschritt (a) wird ein erstes Verbundmaterial aus mindestens einem ersten Festelektrolyt und mindestens einem ersten Bindemittel sowie gegebenenfalls einem Leitsalz bereitgestellt. Geeignete Materialien wurden zuvor bereits beschrieben. Die Bereitstellung des ersten Verbundmaterials erfolgt vorzugsweise, indem das Bindemittel wenigstens teilweise plastifiziert wird und der mindestens eine erste Festelektrolyt sowie das gegebenenfalls enthaltene Leitsalz mittels eines Mischers und/oder Kneters in das plastifizierte Bindemittel eingearbeitet werden. Die Plastifizierung kann durch Zufuhr von Wärme und/oder durch die Zugabe eines Lösungsmittels erfolgen. Geeignete Lösungsmittel sind solche, die in der Lage sind, das verwendet Bindemittel mindestens teilweise zu lösen.

In Verfahrensschritt (b) wird mindestens eine im Wesentlichen nicht poröse Schicht aus dem ersten Verbundmaterial auf einer Substratoberfläche aufgebracht, um so eine im Wesentlichen nicht poröse Festelektrolytschicht zu bilden, die eine erste und eine zweite Oberfläche aufweist. Die zweite Oberfläche ist dabei der Substratoberfläche zugewandt. Die erste Oberfläche ist von der Substratoberfläche abgewandt und frei zugänglich.

Dazu wird das in Verfahrensschritt (a) erhaltene, plastifizierte Verbundmaterial auf eine Substratoberfläche aufgebracht. Hierzu sind dem Fachmann verschieden Verfahren geläufig. Als geeignete Verfahren zur Herstellung sind insbesondere hervorzuheben: Doctor Blade Coating (Rakeln), Offsetdruck, Siebdruck, Ink-Jet Printing, Spin Coating, Rolle-zu-Rolle-Prozess unter Verwendung einer Trägerfolie, Stacking-Prozess unter Verwendung einer Trägerfolie, Extrusion / Dry-Coating. Die Verfahren können aus der Schmelze oder unter Verwendung eines geeigneten Lösungsmittels durchgeführt werden. Vorzugsweise wird unmittelbar das plastifizierte Verbundmaterial eingesetzt, wie dieses aus Verfahrensschritt (a) erhalten wird. In einer bevorzugten Ausführungsform wird ein Lösungsmittel eingesetzt. Bei Verwendung eines Lösungsmittels wird dieses vorzugsweise unter reduziertem Druck und/oder erhöhter Temperatur nach Durchführung des Verfahrensschrittes wieder entfernt. Die Porosität kann durch anschließende Press-, Walz, oder Kalandrierverfahren reduziert werden. Insbesondere im Fall von oxidischen Ionenleitern wird die auf die Substratoberfläche aufgebrachte, im Wesentlichen nicht poröse Festelektrolytschicht gesintert, wobei sich organische Zusätze wie Binder zersetzen.

In Verfahrensschritt (c) wird ein zweites Verbundmaterial aus mindestens einem zweiten Festelektrolyt und mindestens einem zweiten Bindemittel sowie gegebenenfalls einem Leitsalz und/oder elektrischen Leitaddidiv bereitgestellt. Geeignete Materialien wurden zuvor bereits beschrieben. Die Bereitstellung des zweiten Verbundmaterials erfolgt vorzugsweise, indem das Bindemittel wenigstens teilweise plastifiziert wird und der mindestens eine zweite Festelektrolyt sowie das gegebenenfalls enthaltene Leitsalz mittels eines Mischers und/oder Kneters in das plastifizierte Bindemittel eingearbeitet werden. Die Plastifizierung kann durch Zufuhr von Wärme und/oder durch die Zugabe eines Lösungsmittels erfolgen. Geeignete Lösungsmittel sind solche, die in der Lage sind, das verwendete Bindemittel mindestens teilweise zu lösen.

In Verfahrensschritt (d) wird mindestens eine poröse Schicht aus dem zweiten Verbundmaterial auf mindestens einem Teil der ersten Oberfläche der im Wesentlichen nicht porösen Festelektrolytschicht aufgebracht, um so eine poröse Festelektrolytschicht zu bilden, die eine erste und eine zweite Oberfläche aufweist, wobei die zweite Oberfläche der porösen Festelektrolytschicht der ersten Oberfläche der im Wesentlichen nicht porösen Festelektrolytschicht zugewandt ist.

Dazu wird das in Verfahrensschritt (c) erhaltene, plastifizierte zweite Verbundmaterial auf mindestens einem Teil der ersten Oberfläche der im Wesentlichen nicht porösen Festelektrolytschicht aufgebracht. Hierzu sind dem Fachmann verschieden Verfahren geläufig. Als geeignete Verfahren zur Herstellung sind insbesondere hervorzuheben: Doctor Blade Coating (Rakeln), Offsetdruck, Siebdruck, Ink-Jet Printing, Spin Coating, Rolle-zu-Rolle-Prozess unter Verwendung einer Trägerfolie, Stacking-Prozess unter Verwendung einer Trägerfolie, Extrusion / Dry-Coating. Die Verfahren können aus der Schmelze oder unter Verwendung eines geeigneten Lösungsmittels durchgeführt werden. Vorzugsweise wird unmittelbar das plastifizierte Verbundmaterial eingesetzt, wie dieses aus Verfahrensschritt (c) erhalten wird.

Vorzugsweise wird ein Lösungsmittel eingesetzt. Durch anschließendes Entfernen des Lösungsmittels, wird so zugleich die gewünschte Porosität der porösen Schicht eingestellt. Das Entfernen des Lösungsmittels erfolgt vorzugsweise unter erhöhter Temperatur und/oder reduziertem Druck.

Wird zur Bereitstellung der porösen Schicht das aus Verfahrensschritt (c) erhaltene plastifizierte zweite Verbundmaterial ohne Zugabe eines Lösungsmittels eingesetzt, so können diesem zur Einstellung der Porosität der porösen Schicht flüchtige Additive (z.B. $CO_2$) zugesetzt werden. In diesem Fall entfällt das Entfernen des Lösungsmittels. Die Reduzierung des Umgebungsdrucks kann dennoch vorteilhaft sein, um die Porenbildung zu regulieren.

Alternativ können auch Additive in die porösen Schicht eingearbeitet werden, welche unter Zersetzung bei erhöhten Temperaturen gezielt entfernt werden können, beispielsweise durch porengebende Partikel eine Polymers (z.B. PMMA), welches vorzugsweise eine Zersetzungstemperatur aufweist, die unterhalb der Zersetzungstemperatur des eingesetzten Bindemittels liegt. Insbesondere im Falle von oxidischen Ionenleitern wird der so erhaltene Schichtverbund gesintert, wobei sich organische Zusätze wie Binder und porengebende Partikel zersetzen.

In einem nachfolgenden Verfahrensschritt (e) wird mindestens ein Teil der Porenoberfläche der Poren der porösen Festelektrolytschicht mit mindestens einem Material zur Reduzierung des Grenzflächenwiderstands zwischen dem zweiten Festelektrolyt und elementarem Lithium beschichtet, wobei die Schichtdicke der Beschichtung und/oder der Bedeckungsgrad mit zunehmendem Abstand der jeweiligen Porenoberfläche von der ersten Oberfläche der porösen Festelektrolytschicht abnimmt. Geeignete Materialien wurden zuvor bereits beschrieben.

Als geeignete Verfahren zur Beschichtung der Grenzflächen bzw. Oberflächen der porösen Festelektrolytschicht werden vorzugsweise chemische Gasphasenabscheidungstechniken (CVD), insbesondere in der Ausführungsform der Atomlagenabscheidung (ALD), physikalische Gasphasenabscheidungstechniken (PVD), insbesondere Sputtern und Aufdampfen, Infiltration der Poren durch Auftragung einer Suspension mit einem geeigneten Lösungsmittel und/oder Suspensionsmittel, beispielsweise mittels Doctor Blade (Rakeln) oder Ink-Jet Printing), gefolgt von Trocknung, sowie galvanische Abscheidungsverfahren eingesetzt.

Der bevorzugte graduelle Verlauf der Schichtdicke der Beschichtung innerhalb der porösen Festelektrolytschicht wird dabei in den genannten Gasphasenabscheidungstechniken über eine geeignete Wahl der Abscheidungsbedingungen (Druck der Vakuum-Kammer, Temperatur, vorgelegte Stoffmenge bzw. Konzentration) und Applikationsdauer bzw. Pulsdauer und Pulsfrequenz kontrolliert. Wird die Beschichtung mittels eines Suspensionsverfahrens aufgetragen, kann der graduelle Verlauf der Schichtdicke der Beschichtung innerhalb der porösen Festelektrolytschicht über die vorgelegte Stoffmenge und Konzentration sowie die Trocknungsbedingungen kontrolliert werden.

In Verfahrensschritt (g) wird mindestens eine Stromsammlerschicht auf die erste Oberfläche der porösen Festelektrolytschicht aufgebracht. Dies kann in Form einer vorgefertigten Stromsammlerfolie in einem Rolle-zu-Rolle-Verfahren erfolgen. Alternativ sind auch andere Verfahren möglich, beispielsweise Beschichtungsverfahren wie physikalische Gasphasenabscheidungstechniken (PVD), insbesondere Sputtern und Aufdampfen.

Für den Fachmann ist ersichtlich, dass die beschriebene Abfolge der Verfahrensschritte (a) bis (g) nur beispielhaft ist und nicht der tatsächlichen chronologischen Abfolge der Durchführung der Verfahrensschritte entsprechen muss. Beispielsweise können alternativ die Verfahrensschritt (a) und (b) unabhängig von den Verfahrensschritten (c), (d), (e) und/oder (f) erfolgen, und die mindestens eine poröse Festelektrolytschicht (ggf. inklusive der Stromsammlerschicht) und die mindestens eine im Wesentlichen nicht poröse Festelektrolytschicht erst nach ihrer Fertigstellung miteinander verbunden werden.

Die Poren der porösen Festelektrolytschicht der erhaltenen Kompositelektrode können optional in einem weiteren Verfahrensschritt vollständig oder teilweise mit elementarem Lithium befüllt werden. Dies ist insbesondere dann erforderlich, wenn die Kompositelektrode als negative Elektrode in einer elektrochemischen Festkörperzelle eingesetzt werden soll, die als Aktivmaterial der positiven Elektrode ein initial vollständig delithiiertes Aktivmaterial (z.B. Konversionsmaterialien wie SPAN, $V_2O_5$) umfasst. Die Befüllung der Poren mit elementarem Lithium kann durch chemische Gasphasenabscheidungstechniken (CVD), insbesondere in der Ausführungsform der Atomlagenabscheidung (ALD), physikalische Gasphasenabscheidungstechniken (PVD), insbesondere Sputtern und Aufdampfen, galvanische Abscheidungsverfahren, und / oder Infiltration der Poren mit flüssigem (geschmolzenem) Lithiummetall erfolgen. Die Menge des eingesetzten Lithiums muss dabei mindestens der Kapazität des initial vollständig delithiierten Aktivmaterials der positiven Elektrode entsprechen. Zusätzlich kann ein geringer Überschuss eingesetzt werden, um Verluste des Lithiums während des Betriebs der elektrochemischen Festkörperzelle zu kompensieren. Dieses Vorgehen ist auch bei Einsatz von Aktivmaterialien an der positiven Elektrode vorteilhaft, die nicht vollständig delithiiert sind. In einer bevorzugten Ausführungsform sind die Poren der porösen Festelektrolytschicht der erhaltenen Kompositelektrode daher mindestens teilweise mit elementarem Lithium gefüllt. Die Befüllung erfolgt vorzugsweise homogen über das gesamte offene Porenvolumen der Kompositelektrode.

Gegenstand der Erfindung ist auch die Verwendung einer erfindungsgemäßen Kompositelektrode bzw. einer Kompositelektrode, erhalten nach einem erfindungsgemäßen Verfahren, als negative Elektrode (Anode) in einer elektrochemischen Festkörperzelle, insbesondere in einer Lithiumionen-Batterie.

Gegenstand der Erfindung ist dementsprechend auch eine elektrochemische Festkörperzelle, umfassend mindestens eine Kompositelektrode bzw. eine Kompositelektrode, erhalten nach einem erfindungsgemäßen Verfahren, als negative Elektrode (Anode). Da die im Wesentlichen nicht poröse Festelektrolytschicht der erfindungsgemäßen Kompositelektrode in einer solchen elektrochemischen Festkörperzelle auch die Funktion eines Separators und Elektrolyts übernehmen kann, kann auf weitere Separatoren und/oder Elektrolyte prinzipiell verzichtet werden.

Die erfindungsgemäße elektrochemische Festkörperzelle umfasst somit mindestens eine erfindungsgemäße Kompositelektrode sowie mindestens eine positive Elektrode (Kathode) wobei die erfindungsgemäße Kompositelektrode so angeordnet ist, dass die zweite Oberfläche der mindestens einen im Wesentlichen nicht porösen Festelektrolytschicht der positiven Elektrode zugewandt ist und vorzugsweise unmittelbar mit dieser in Kontakt steht.

Die positive Elektrode umfasst mindestens ein Aktivmaterialkomposit, umfassend mindestens ein Aktivmaterial, mindestens ein Bindemittel, sowie gegebenenfalls Leitadditive und Festelektrolyte.

Als geeignete Aktivmaterialien der positiven Elektrode hervorzuheben sind Schichtoxide wie Lithium-Nickel-Kobalt-Aluminium-Oxide (NCA; z.B. $LiNi_{0.8}Co_{0.15}Al_{0.05}O_2$), Lithium-Nickel-Kobalt-Mangan-Oxide (NCM; z.B. $LiNi_{0.8}Mn_{0.1}Co_{0.1}O_2$ (NMC (811)), $LiNi_{0.33}Mn_{0.33}Co_{0.33}O_2$ (NMC (111)), $LiNi_{0.6}Mn_{0.2}Co_{0.2}O_2$ (NMC (622)), $LiNi_{0.5}Mn_{0.3}Co_{0.2}O_2$ (NMC (532)) oder $LiNi_{0.4}Mn_{0.3}Co_{0.3}O_2$ (NMC (433), überlithiierte Schichtoxide der allgemeinen Formel $n(Li_2MnO_3) \cdot 1\text{-}n (LiMO_2)$ mit M = Co, Ni, Mn, Cr und $0 \leq n \leq 1$, Spinelle der allgemeinen Formel $n(Li_2MnO_3) \cdot 1\text{-}n (LiM_2O_4)$ mit M=Co, Ni, Mn, Cr und $0 \leq n \leq 1$. Ferner sind insbesondere Spinellverbindungen der Formel $LiM_xMn_{2\text{-}x}O_4$ mit M = Ni, Co, Cu, Cr, Fe (z.B. $LiMn_2O_4$, $LiNi_{0.5}Mn_{1.5}O_4$), Olivinverbindungen der Formel $LiMPO_4$ mit M = Mn, Ni, Co, Cu, Cr, Fe (z.B. $LiFePO_4$, $LiMnPO_4$, $LiCoPO_4$), Silikatverbindungen der Formel $Li_2MSiO_4$ mit M = Ni, Co, Cu, Cr, Fe, Mn (z.B. $Li_2FeSiO_4$), Tavoritverbindungen (z.B. $LiVPO_4F$), $Li_2MnO_3$, $Li_{1.17}Ni_{0.17}Co_{0.1}Mn_{0.56}O_2$, $LiNiO_2$, $Li_2MO_2F$ (mit M = V, Cr), $Li_3V_2(PO_4)_3$, Konversionsmaterialien wie $FeF_3$, $V_2O_5$ und / oder schwefelhaltige Materialien wie SPAN.

Geeignete Bindemittel, Leitadditive und Festelektrolyte können aus den vorgenannten ausgewählt werden.

In einer Ausführungsform der Erfindung umfasst die elektrochemische Festkörperzelle eine positive Elektrode, die ein initial vollständig delithiiertes Aktivmaterial enthält und wobei die Poren der porösen Festelektrolytschicht der erfindungsgemäße Kompositelektrode ganz oder teilweise mit elementarem Lithium gefüllt sind.

In einer alternativen Ausführungsform der Erfindung umfasst die elektrochemische Festkörperzelle eine positive Elektrode, die ein initial nicht vollständig delithiiertes Aktivmaterial enthält und wobei die Poren der porösen Festelektrolytschicht der erfindungsgemäße Kompositelektrode teilweise mit elementarem Lithium gefüllt sind, um Verlust des Lithiums zu kompensieren.

Die erfindungsgemäße elektrochemische Festkörperzelle kann beispielsweise vorteilhaft eingesetzt werden in einem Elektrofahrzeug (EV), in einem Hybridfahrzeug (HEV), in einem Plug-In-Hybridfahrzeug (PHEV), in einem Werkzeug oder in einem Consumer-Elektronik-Produkt. Unter Werkzeugen sind dabei insbesondere Heimwerkzeuge sowie Gartenwerkzeuge zu verstehen. Unter Consumer-Elektronik-Produkten sind insbesondere Mobiltelefone, Tablet-PCs oder Notebooks zu verstehen. Zukünftig ist aufgrund der hohen Energiedichte der erfindungsgemäßen elektrochemischen Festkörperzelle auch ein Einsatz in elektrisch betriebenen Fluggeräten denkbar.

Vorteile der Erfindung

Die erfindungsgemäße Kompositelektrode stellt eine poröse Elektrode zur Abscheidung von elementarem Lithium als Aktivmaterial in einer elektrochemischen Festkörperzelle mit großer Oberfläche bereit. In den offenen Poren der porösen Festelektrolytschicht der Kompositelektrode kann aufgrund der erfindungsgemäßen Beschichtung während des Ladens der elektrochemischen Festkörperzelle metallisches Lithium homogen abgeschieden und beim Entladen wieder aufgelöst wird. In Abwesenheit der erfindungsgemäßen Beschichtung wird das Lithium hingegen inhomogen innerhalb der porösen Festelektrolytschicht abgeschieden (nämlich bevorzugt in Separatornähe). Ein Teil der Poren wird so schneller als der Rest vollständig gefüllt. In der Folge kommt es lokal zu hohen mechanischen Spannungen, die zur Schädigung der elektrochemischen Festkörperzelle, bis hin zum Aufreißen des Festelektrolyten und in Folge zur Minderung der elektrochemischen Leistung oder dem komplettem Versagen der elektrochemischen Festkörperzelle führen können. Die Erfindung löst dieses Problem durch die gezielte inhomogene Einstellung des Grenzflächenwiderstands zwischen Festelektrolyt und Lithium durch eine gezielte Beschichtung der Porenoberfläche der porösen Festelektrolytschicht. Erhöhte Stromdichten und eine verstärkte Schädigung in Separatornähe und die damit einhergehende Beeinträchtigung der Lebensdauer der elektrochemischen Festkörperzelle wird vermieden.

Die Kompositelektrode zeichnet sich somit - im Vergleich zu einer herkömmlichen porösen Elektrode zur Abscheidung von metallischem Lithium - aus durch ein homogenes Abscheidungsverhalten in der porösen Kompositelektrode und dadurch geringere maximale lokale Stromstärken und deutlich verringerte Alterung bzw. verlängerte Lebensdauer der elektrochemischen Festkörperzelle, da hohe lokale mechanische Spannungen sowie eine dadurch erforderliche Extrusion von Lithium-Metall innerhalb der porösen Anode weitgehend vermieden werden.

Sofern die nach dem vollständigen Befüllen der Poren mit metallischen Lithium auftretenden lokalen mechanischen Spannungen über der Bruchfestigkeit der porösen Festelektrolytschicht liegen, kann ohne die erfindungsgemäße Beschichtung der Porenoberfläche der porösen Festelektrolytschicht nur ein kleiner Bruchteil der Anoden-Kapazität ausgenutzt werden, so dass der Einsatz der Erfindung für die Funktion einer entsprechenden Hochenergie-Batteriezelle erforderlich ist.

Zudem ermöglicht die Erfindung Vereinfachungen für das Batteriemanagement-System, da die poröse Festelektrolytschicht während des Ladens und Entladens einen konstanten Gesamtwiderstand sowie keine Hysterese aufweist, die in herkömmlichen porösen Elektroden zu beobachten ist.

Kurze Beschreibung der Zeichnungen

Ausführungsbeispiele der Erfindung werden anhand der Zeichnungen und der nachfolgenden Beschreibung näher erläutert:

Figur 1          zeigt die schematische Darstellung einer erfindungsgemäßen Kompositelektrode;

Figur 2 a, b     zeigt eine Simulation des Abscheidungsverhaltens von Lithium in einer herkömmlichen porösen Elektrode; und

Figur 3 a, b     zeigt eine Simulation des Abscheidungsverhaltens von Lithium in einer erfindungsgemäßen Kompositelektrode;

Ausführungsformen der Erfindung

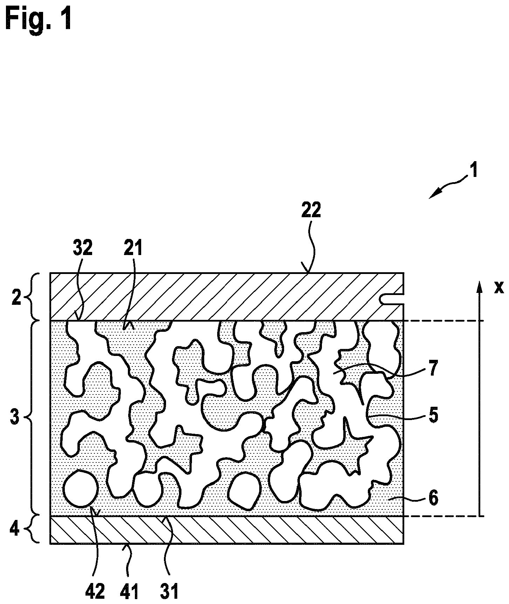

Figur 1 zeigt die schematische Darstellung einer erfindungsgemäßen Kompositelektrode 1, umfassend eine im Wesentlichen nicht poröse Festelektrolytschicht 2, eine poröse Elektrolytschicht 3 und eine Stromsammlerschicht 4. Die im Wesentlichen nicht poröse Festelektrolytschicht 2 weist eine erste Oberfläche 21 und eine zweite Oberfläche 22 auf. Die poröse Elektrolytschicht 3 weist eine erste Oberfläche 31 und eine zweite Oberfläche 32 auf. Die Stromsammlerschicht 4 weist eine erste Oberfläche 41 und eine zweite Oberfläche 42 auf. Die im Wesentlichen nicht poröse Festelektrolytschicht 2 umfasst mindestens einen ersten Festelektrolyt, beispielsweise LLZO, und gegebenenfalls mindestens ein Bindemittel, beispielsweise PVDF. Die poröse Festelektrolytschicht 3 ist mit der zweiten Oberfläche 32 unmittelbar auf der ersten Oberfläche 21 der im Wesentlichen nicht porösen Festelektrolytschicht 2 angeordnet. Die poröse Festelektrolytschicht 3 umfasst mindestens einen zweiten Festelektrolyten 7, beispielsweise LLZO, und gegebenenfalls mindestens ein Bindemittel, beispielsweise PVDF, und eine Vielzahl offener Poren 6, die über das gesamte Volumen der porösen Festelektrolytschicht 3 verteilt sind. Die Porenoberflächen sind erfindungsgemäß mit einer Beschichtung 5 versehen, die ein Material zur Reduzierung eines Grenzflächenwiderstands Z zwischen dem zweiten Festelektrolyten 7 und elementarem Lithium umfasst. Die Stromsammlerschicht 4 ist mit der ersten Oberfläche 41 unmittelbar auf der ersten Oberfläche 31 der porösen Festelektrolytschicht 3 angeordnet. Die Stromsammlerschicht 4 ist beispielsweise aus Kupfer gefertigt. Die Schichtdicke und/oder der Bedeckungsgrad der Beschichtung 5 nimmt mit zunehmendem Abstand x der Porenoberfläche von der ersten Oberfläche 41 der Stromsammlerschicht 4 bzw. der ersten Oberfläche 31 der porösen Festelektrolytschicht 3 ab.

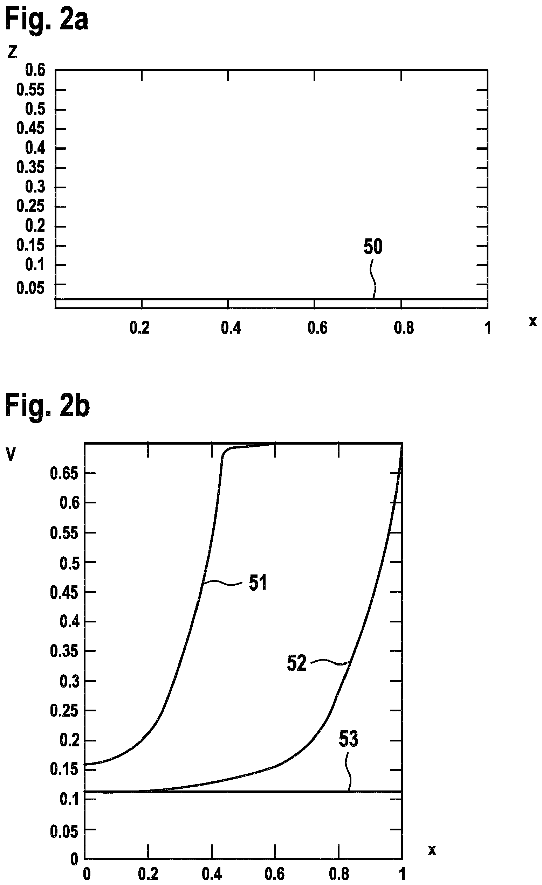

In Figur 2a, b ist eine Simulation des Abscheidungsverhaltens von elementarem Lithium in einer herkömmlichen porösen Kompositelektrode dargestellt. In Figur 2a ist auf der Abszissenachse der Abstand x von der Oberfläche der Stromsammlerschicht 4 aufgetragen und auf der Ordinatenachse der Grenzflächenwiderstand Z aufgetragen. Es ersichtlich, dass der Grenzflächenwiderstand Z über den gesamten Abstand x konstant ist (Kurve 50). In Figur 2b ist auf der Abszissenachse der Abstand x von der Oberfläche der Stromsammlerschicht 4 aufgetragen und auf der Ordinatenachse der Volumenanteil V an metallischem Lithium aufgetragen. Es ist zu erkennen, dass die Abscheidung von Lithium bevorzugt in den Bereichen erfolgt, die einen großen Abstand x von der Oberfläche der Stromsammlerschicht 4 haben (Kurve 52). Erst wenn bereits eine größere Menge an Lithium abgeschieden ist, wird auch Lithium an Porenoberflächen abgeschieden, die einen geringeren Abstand x von der Oberfläche der Stromsammlerschicht 4 haben (Kurve 51). Kurve 53 zeigt den Füllungsgrad der Poren 6 mit Lithium zu Beginn der Abscheidung.

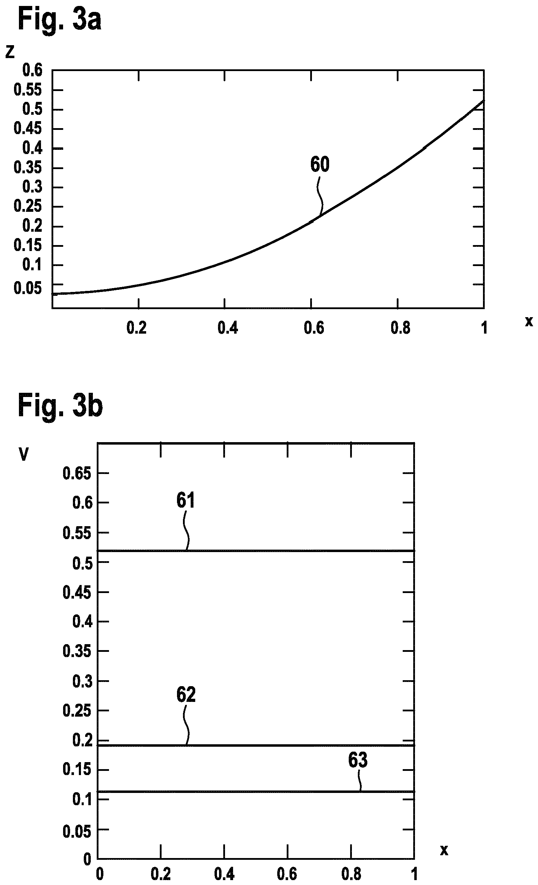

In Figur 3a, bist eine Simulation des Abscheidungsverhaltens von elementarem Lithium in einer erfindungsgemäßen Kompositelektrode 1 dargestellt. In Figur 3a ist auf der Abszissenachse der Abstand x von der Oberfläche der Stromsammlerschicht 4 aufgetragen und auf der Ordinatenachse der Grenzflächenwiderstand Z aufgetragen. Es ersichtlich, dass der Grenzflächenwiderstand Z mit zunehmendem Abstand x kontinuierlich ansteigt (Kurve 60). In Figur 3b ist auf der Abszissenachse der Abstand x von der Oberfläche der Stromsammlerschicht 4 aufgetragen und auf der Ordinatenachse der Volumenanteil V an metallischem Lithium aufgetragen. Es ist zu erkennen, dass die Abscheidung von Lithium homogen über das gesamte Volumen des porösen Festelektrolytschicht 3 erfolgt (Kurve 61, 62). Kurve 63 zeigt den Füllungsgrad der Poren 6 mit Lithium zu Beginn der Abscheidung.

**Patentansprüche**

1. Kompositelektrode (1) für eine elektrochemische Festkörperzelle, umfassend:

mindestens eine im Wesentlichen nicht poröse Festelektrolytschicht (2), umfassend mindestens einen ersten Festelektrolyten,
mindestens eine poröse Festelektrolytschicht (3), umfassend mindestens einen zweiten Festelektrolyten (7), und mindestens eine Stromsammlerschicht (4),
wobei
die poröse Festelektrolytschicht (3) auf mindestens einer Oberfläche (41, 42) der Stromsammlerschicht (4) und zwischen der im Wesentlichen nicht porösen Festelektrolytschicht (2) und der Stromsammlerschicht (4) angeordnet ist,
mindestens ein Teil der Oberfläche der Poren (6) der porösen Festelektrolytschicht (3) durch eine Beschichtung (5) mit mindestens einem Material zur Reduzierung eines Grenzflächenwiderstands Z zwischen dem zweiten Festelektrolyten (7) und elementarem Lithium modifiziert wurde,
und die Schichtdicke und/oder der Bedeckungsgrad der Beschichtung (5) der Oberfläche der Poren (6) der porösen Festelektrolytschicht (3) mit mindestens einem Material zur Reduzierung des Grenzflächenwiderstands Z zwischen dem zweiten Festelektrolyten (7) und elementarem Lithium mit zunehmendem Abstand x der jeweiligen Porenoberfläche von der Stromsammlerschicht (4) abnimmt.

2. Kompositelektrode (1) nach Anspruch 1, wobei die mindestens eine im Wesentlichen nicht poröse Festelektrolytschicht (2) und die mindestens eine poröse Festelektrolytschicht (3) mindestens einen gesinterten oder nicht gesinterten, anorganischen Festelektrolyten umfassen.

3. Kompositelektrode (1) nach Anspruch 1 oder 2, wobei die Poren (6) der porösen Festelektrolytschicht (3) ganz oder teilweise mit elementarem Lithium gefüllt sind.

4. Kompositelektrode (1) nach einem der Ansprüche 1 bis 3, wobei die Reduzierung des Grenzflächenwiderstands Z zwischen dem zweiten Festelektrolyten (7) und elementarem Lithium folgendem funktionalem Zusammenhang folgt:

$$Z(x) = const. + \frac{a_v}{2\sigma_{ion}} x^2$$

wobei $\alpha_v$ die volumen-spezifische aktive Oberfläche der porösen Festelektrolytschicht (3) ist,
$\sigma_{ion}$ der effektive ionische Widerstand des zweiten Festelektrolyten (7) ist, und
x der Abstand der jeweiligen Porenoberfläche zur Oberfläche der Stromsammlerschicht (4) ist.

5. Kompositelektrode (1) nach einem der Ansprüche 1 bis 4, wobei die Beschichtung (5) der Porenoberfläche der Poren (6) der porösen Festelektrolytschicht (3) mindestens ein Material umfasst, welches der Erhöhung der elektrischen Leitfähigkeit und/oder Erhöhung der Permittivität (dielektrischen Leitfähigkeit) der Porenoberfläche dient.

6. Verfahren zur Herstellung einer Kompositelektrode (1) nach einem der Ansprüche 1 bis 5, umfassend die Verfahrensschritte:

(a) Bereitstellen eines ersten Verbundmaterials aus mindestens einem ersten Festelektrolyten ,
(b) Bereitstellen mindestens einer im Wesentlichen nicht porösen Schicht aus dem ersten Verbundmaterial auf einer Substratoberfläche, um so eine im Wesentlichen nicht poröse Festelektrolytschicht (2) zu bilden, die eine erste Oberfläche (21) und eine zweite Oberfläche (22) aufweist;
(c) Bereitstellen eines zweiten Verbundmaterials aus mindestens einem zweiten Festelektrolyten (7),
(d) Aufbringen mindestens einer porösen Schicht aus dem zweiten Verbundmaterial auf mindestens einem Teil der ersten Oberfläche (21) der im Wesentlichen nicht porösen Festelektrolytschicht (2), um so eine porösen Festelektrolytschicht (3) zu bilden, die eine erste Oberfläche (31) und eine zweite Oberfläche (32) aufweist, wobei die zweite Oberfläche (32) der porösen Festelektrolytschicht (3) der ersten Oberfläche (21) der im Wesentlichen nicht porösen Festelektrolytschicht (2) zugewandt ist;
(e) Beschichten mindestens eines Teils der Porenoberfläche der Poren (6) des zweiten Verbundmaterials mit mindestens einem Material zur Reduzierung des Grenzflächenwiderstands Z zwischen dem zweiten Festelektrolyten (7) und elementarem Lithium, wobei die Schichtdicke und/oder der Bedeckungsgrad der Beschichtung (5) mit zunehmendem Abstand der jeweiligen Porenoberfläche von der ersten Oberfläche (31) der porösen Festelektrolytschicht (3) abnimmt;
(f) Aufbringen mindestens einer Stromsammlerschicht (4) auf die erste Oberfläche (31) der porösen Festelektrolytschicht (3); und
(g) gegebenenfalls vollständiges oder teilweises Befüllen der Poren (6) des ersten Verbundmaterials mit elementarem Lithium.

7. Verfahren nach Anspruch 6, wobei das Beschichten des mindestens einen Teils der Porenoberfläche des ersten Verbundmaterials mit Hilfe eines chemischen Gasabscheidungsverfahrens, eines physikalischen Gasabscheidungsverfahrens und/oder eines Infiltrationsverfahrens erfolgt.

8. Verwendung einer Kompositelektrode (1) nach einem der Ansprüche 1 bis 5, oder einer Kompositelektrode (1), hergestellt nach einem Verfahren gemäß Anspruch 6 oder 7, als negative Elektrode in einer elektrochemischen Festkörperzelle, insbesondere in einer Lithiumionen-Batterie.

9. Elektrochemische Festkörperzelle, umfassend mindestens eine Kompositelektrode (1) nach einem der Ansprüche 1 bis 5, oder einer Kompositelektrode (1), hergestellt nach einem Verfahren gemäß Anspruch 6 oder 7, als negative Elektrode.

10. Elektrochemische Festkörperzelle nach Anspruch 9, wobei die elektrochemische Festkörperzelle eine positive Elektrode umfasst, die ein initial vollständig delithiiertes Aktivmaterial enthält und wobei die Poren (6) der porösen Festelektrolytschicht (3) der Kompositelektrode (1) ganz oder teilweise mit elementarem Lithium gefüllt sind.

# Fig. 1

# Fig. 2a

# Fig. 2b

# Fig. 3a

# Fig. 3b

**Europäisches Patentamt**
**European Patent Office**
**Office européen des brevets**

# EUROPÄISCHER RECHERCHENBERICHT

Nummer der Anmeldung

EP 19 20 7660

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2017/116599 A2 (UNIV MARYLAND [US]) 6. Juli 2017 (2017-07-06) * Seite 14, Absatz 0118 - Absatz 0311; Abbildungen 3-36; Beispiele 1-32 * ----- | 1-10 | INV. H01M4/04 H01M4/139 H01M10/04 H01M10/0562 |
| X | WO 2018/085847 A1 (UNIV MARYLAND [US]) 11. Mai 2018 (2018-05-11) * Seite 9, Absatz 0075 - Seite 23, Absatz 0133; Abbildungen 1-11b * ----- | 1-4 | ADD. H01M4/02 H01M10/052 |
| A | DE 11 2013 002219 T5 (TOYOTA JIDOSHOKKI KK [JP]) 15. Januar 2015 (2015-01-15) * Seite 3, Absatz 0010 - Seite 16, Absatz 0100; Abbildungen 1-10 * ----- | 1-10 | |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| München | 12. März 2020 | Polisski, Sergej |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 ......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 7660

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2020

| Im Recherchenbericht angeführtes Patentdokument | Datum der Veröffentlichung | Mitglied(er) der Patentfamilie | Datum der Veröffentlichung |
|---|---|---|---|
| WO 2017116599 A2 | 06-07-2017 | EP 3384545 A2 | 10-10-2018 |
| | | JP 2019500737 A | 10-01-2019 |
| | | KR 20180091847 A | 16-08-2018 |
| | | US 2020075960 A1 | 05-03-2020 |
| | | WO 2017116599 A2 | 06-07-2017 |
| WO 2018085847 A1 | 11-05-2018 | EP 3535796 A1 | 11-09-2019 |
| | | JP 2019534539 A | 28-11-2019 |
| | | KR 20190088477 A | 26-07-2019 |
| | | US 2020052326 A1 | 13-02-2020 |
| | | WO 2018085847 A1 | 11-05-2018 |
| DE 112013002219 T5 | 15-01-2015 | CN 104272518 A | 07-01-2015 |
| | | DE 112013002219 T5 | 15-01-2015 |
| | | JP 5447578 B2 | 19-03-2014 |
| | | JP 2013232284 A | 14-11-2013 |
| | | US 2015111110 A1 | 23-04-2015 |
| | | WO 2013161310 A1 | 31-10-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017187063 A
- JP 2017117672 A